# EUROPEAN PATENT SPECIFICATION

(11) **EP 2 921 756 B1**
(45) Date of publication and mention of the grant of the patent: **28.12.2016**
(21) Application number: 15158704.5
(22) Date of filing: 11.03.2015
(51) Int. Cl.: F16L 19/06, F16L 19/08

(54) **FITTING FOR CONNECTING A THREADED END MEMBER AND A PIPE WITH A SMOOTH SURFACE**
ANSCHLUSSSTÜCK ZUR VERBINDUNG EINES GEWINDEENDSTÜCKES MIT EINEM GLATTWANDIGEN ROHR
RACCORD POUR RACCORDER UN ÉLÉMENT FILETÉ AVEC UN TUYAU AU PAROI LISSE

(30) Priority: 17.03.2014 IT VI20140058
(43) Date of publication of application: 23.09.2015
(73) Proprietor: Tapel di Mastromatteo Ciro & C. S.a.s, 36043 Camisano Vicentino (IT)
(72) Inventor: Mastromatteo, Ciro, 36043 Camisano Vicentino (IT)
(74) Representative: Autuori, Angelo

(56) References cited:
- WO-A1-02/073077
- GB-A- 411 615
- GB-A- 709 404
- US-A- 3 074 747

## Description

### Field of the Invention

The present invention is generally applicable to the technical field of fitting for pipes, and particularly relates to a screw fitting system for reciprocally connecting a threaded end member and a pipe with a smooth surface, the pipe being multilayer or plastic.

### Background of the Invention

As known, there are several types of fitting systems to connect a pipe with a smooth surface to a metal end member.

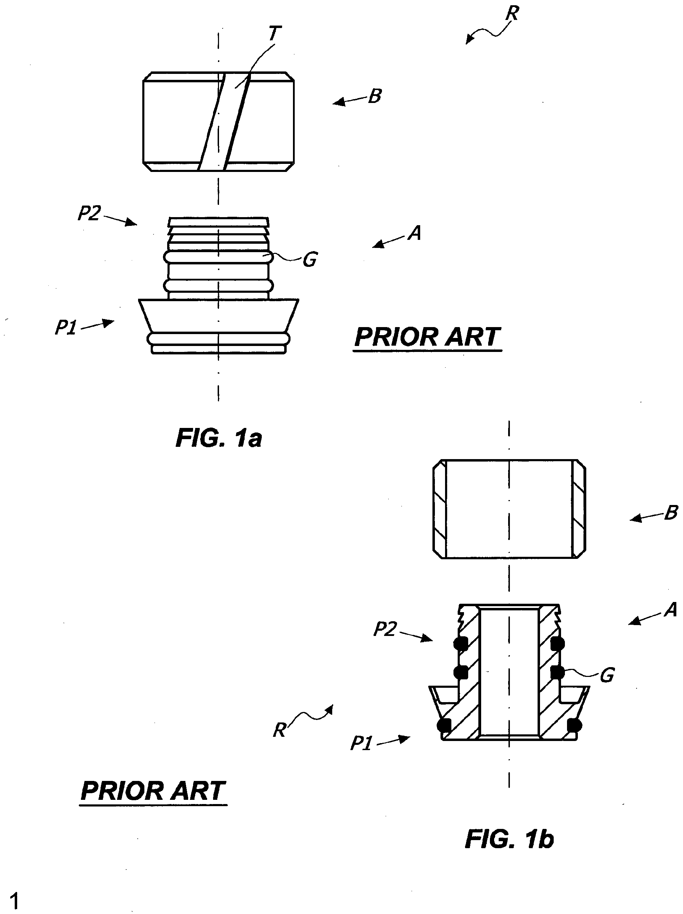

Particularly, as shown in FIGs. 1a and 1b, a fitting **R** is known which includes a metal tubular core **A** having a front portion **P1** coupled with the threaded end member and a rear portion **P2** insertable within the pipe. To ensure the hydraulic seal, some O-rings **G** are fitted over the metal core **A.**

To radially compress the pipe on the rear portion **P2** of the metal core **A,** a ring nut can be provided interacting with an elastic sleeve **B** having a transversal cut **T,** that it is made by milling.

The ring nut and the sleeve **B** have opposite conical surfaces reciprocally cooperating so as the screwing of the ring nut on the threaded end member corresponds to the radial compression of the sleeve **B** and, as a consequence, to the radial compression of the pipe on the rear portion **P2** of the metal core **A.**

The fitting of FIGs. 1a and 1b has some known drawbacks.

First of all, in order to screw the ring nut strong screwing forces have to be performed due to the opposite conical surfaces, that create a rather high fiction.

Furthermore, the rotation of the ring nut and the consequent radial compression of the sleeve **B** on the pipe tends to impress a rotational component thereto, that tends to make the pipe twisting with a consequent weakening of the mechanic structure thereof.

Furthermore, the milling through which the transversal cut **T** is made leaves on the sleeve **B** flashes and sharp edges that tend to cut the surface of the pipe and that externally create a friction with the opposite fustoconical surfaces, thus increasing the above mentioned drawbacks.

A similar fitting is described in document US 3074747A.

### Summary of the Invention

Object of the present invention is to overcome at least partially the above mentioned drawbacks, by providing a high functional, simply constructional and/or low cost fitting.

A particular object of the invention is to provide a fitting that requires minimum screwing forces.

Another object of the invention is to provide a fitting that allows a high mechanic and/or hydraulic seal through time.

Another object of the invention is to provide a solid and reliable fitting that ensures the integrity of the pipe assembled thereon.

These objects, as well as other which will appear hereafter, are fulfilled by a fitting having one or more of the features herein disclosed and/or claimed and/or shown.

Advantageous embodiments of the invention are defined in accordance with the dependent claims.

### Brief description of the drawings

Further features and advantages of the invention will appear more evident reading the detailed description of some preferred not-exclusive embodiments of a fitting **1,** which are shown as a non-limiting example with the help of the annexed drawings, wherein:
**FIGS. 1a** and **1b** are respectively a lateral and a sectioned view of a fitting **R** of the prior art;
**FIG. 2** is an exploded and sectioned view of a first embodiment of the fitting **1;**
**FIG. 3** is an exploded and sectioned view of a second embodiment of the fitting **1;**
**FIGS. 4a** and **4b** are partial sectioned views respectively partially disassembled and partially assembled of the first embodiment of the fitting **1** of FIG. 2;
**FIGS. 5a** and **5b** are partial sectioned views respectively partially disassembled and partially assembled of the second embodiment of the fitting **1** of FIG. 3;
**FIGS. 6a** and **6b** are partial sectioned views respectively partially disassembled and partially assembled of the first embodiment of the fitting **1** of FIG. 3 in use on the pipe **P,** with in **FIG. 6c** some enlarged details of **FIG. 6b****;**
**FIG. 7** is a sectioned assembled view of a third embodiment of the fitting **1** in use on the pipe **P;**
**FIG. 8** is an exploded and sectioned view of another embodiment of the fitting **1;**
**FIGS. 9a** and **9b** are sectioned views respectively exploded and assembled of a further embodiment of the fitting **1.**

### Detailed description of some preferred embodiments

With reference to the above figures, it is described a fitting **1** that can be used for the connection of a pipe **P** with a smooth surface and a threaded end member **T.**

In a *per se* known manner, the pipe **P** may include at least one layer **S1** in polymeric material, for example PVC.

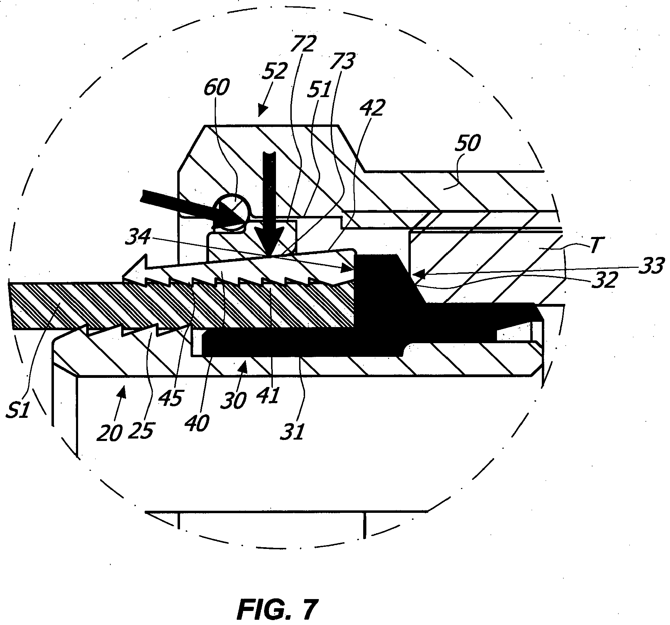

In a first configuration, shown for example in FIG. 7, the pipe **P** may consist of a single layer of polymeric material **S1.** This type of pipe **P** is called "plastic pipe".

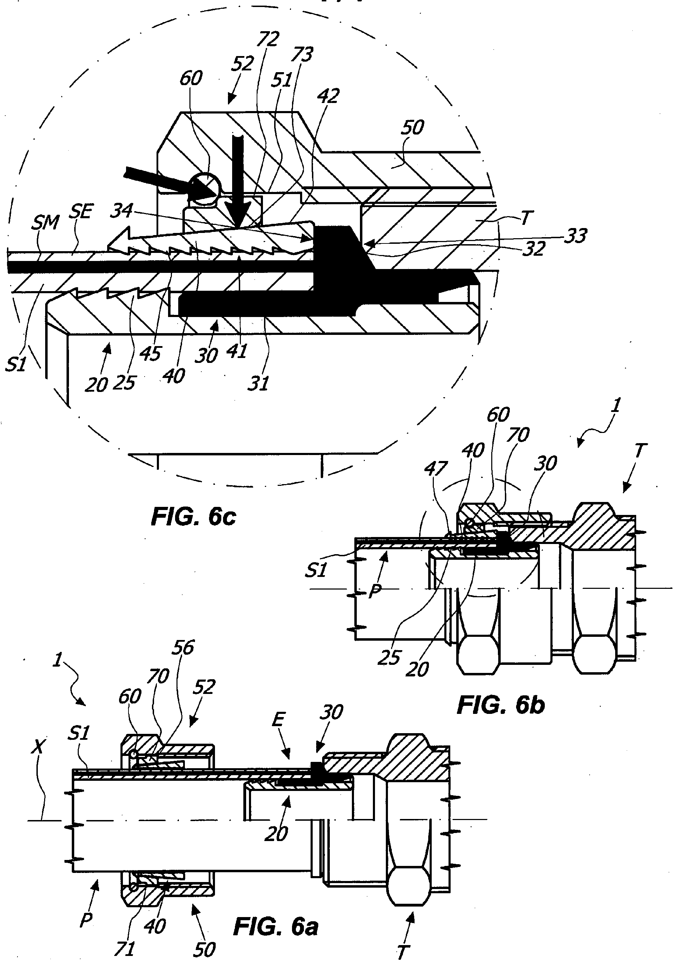

In another configuration, shown for example in FIGs. 6a, 6b and 6c, the pipe **P** may comprise a metal layer **SM** interposed between an outer layer **SE** and an inner layer **S1** in polymeric material. This type of pipe **P** is called a "multilayer pipe".

As better described below, the fitting **1** may have different configuration depending on the pipe **P** to be connected with the threaded end member **T.**

Irrespective of the configuration, the fitting **1** may comprise a core **20** of substantially tubular shape defining an axis **X.** All the elements forming the fitting **1** may be coaxial with the axis **X.**

Suitably, the tubular core **20** may be made of metal or polymeric material.

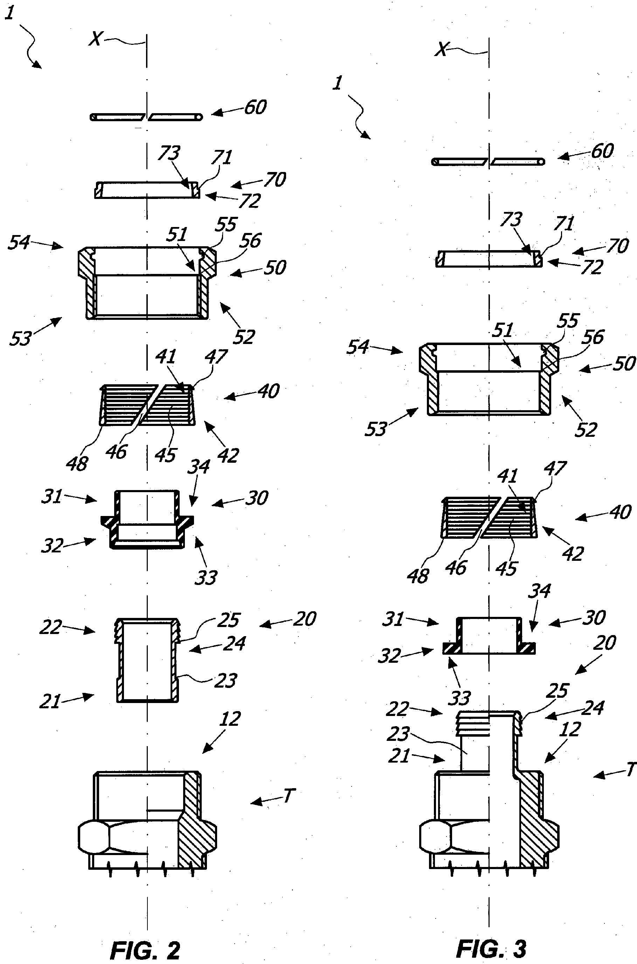

The threaded end member **T,** of substantially cylindrical shape, may have a rear portion **12** susceptible to come in contact engage with the tubular core **20.** On the other hand, in an alternative embodiment shown for example in FIG. 3, the tubular **core 20** and the threaded end member **T** may be monolithic to each other, i.e. made of one single piece.

The tubular core **20** may have a front portion **21** susceptible to be coupled with the threaded end member **T,** for example through a thread or a bayonet or a snap fitting joint, and a rear portion **22** susceptible to be inserted within the end **E** of the pipe **P** to come in contact engage with the inner surface of the latter.

On the other hand, in the alternative above mentioned embodiment, the front portion **21** of the tubular core **20** may be monolithic with the rear portion **12** of the threaded end member **T.** In other words, the threaded end member **T** includes a rear elongated appendix constituted by the tubular core **20.**

Advantageously, the rear portion **22** of the tubular core **20** may include a first smooth portion **23** and a second portion **24** having a diameter substantially greater than the diameter of the first smooth portion **23.**

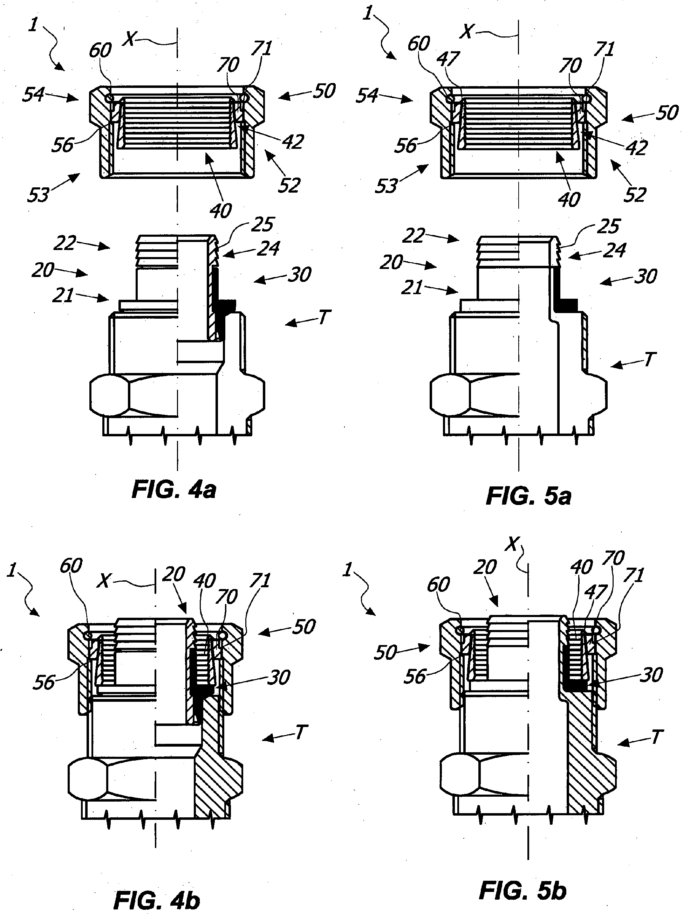

In particular, the second portion **24** may comprise a plurality of teeth **25.** In one embodiment, these teeth **25** may have the shape of saw-blade teeth, as shown for example in FIGs. 2, 3, 4a, 5a, 6c, 7, 8 and 9a.

Suitably, the fitting **1** may comprise a ring nut **50** screwable on the threaded end member **T.** The ring nut **50** may have an outer surface **52** easy to grasp by a user for the screwing and an inner surface **51.**

In particular, the ring nut **50** may comprise a rear portion **54** and a front portion **53.**

The fitting **1** may also comprise an elastic sleeve **40** made of metal, such as copper alloy, or polymeric material. The elastic sleeve **40** may have an inner surface **41** susceptible to come in contact engage with the outer surface of the pipe **P** and an outer surface **42.**

Advantageously, the elastic sleeve **40** may be fitted on the pipe **P.** To this end, the inner surface **41** thereof may include a plurality of annular ribs **45** to ensure the local mechanic seal of the same elastic sleeve **40** on the outer surface of the pipe **P.**

Suitably, the elastic sleeve **40** may have a discontinuity **46** to allow the same to be deformed upon the screwing of the ring nut **50** on the threaded end member **T.**

In a preferred but not exclusive embodiment of the metal sleeve **40,** to remove flashes and sharp edges inside and outside the cut **46,** the elastic sleeve **40** may be subjected to sandblasting or shot peening.

This allows to have a particularly smooth surface, so as to minimize friction upon the screwing of the ring nut **50** on the threaded end member **T.**

Suitably, the fitting **1** may also comprise an elastomeric seal **30** placed peripherally to the tubular core **20** and susceptible to remain interposed between the end **E** of the pipe **P,** the elastic sleeve **40** and the threaded end member T to provide the local hydraulic seal.

In a preferred but not exclusive embodiment, the elastomeric seal **30** may be fit on the tubular core **20.**

Advantageously, the seal **30** may include a first tubular portion **31** coaxially coupled with the tubular core **20** in correspondence with the first smooth portion **23** of the rear portion **22** thereto.

Furthermore, the elastomeric seal **30** may suitably comprise a second flange-shaped portion **32** having a front face **33** susceptible to come in contact engage with the threaded end member **T** and a rear face **34** susceptible to act as an abutment for both the edge of the pipe **P** and an edge **48** of the elastic sleeve **40.**

In this way, in addition to increasing the hydraulic local seal, the flange-shaped portion **32** also acts as a barrier to insulate stray currents that may develop between the pipe and the end member in case of multilayer pipe.

The fitting **1** may also comprise a metal annular elastic member **60** of substantially circumferential section snap fitted into the annular seat **55** of the ring nut **50,** and a rigid ring presser **70,** which may be made of metal by turning or cold molding.

Suitably, the latter may include an outer surface **72** having a step **71** susceptible to impact against the metal annular elastic member **60** upon the screwing of the ring nut **50** on the threaded end member **T.**

The rigid ring presser **70** may also include a substantially fustoconical inner surface **73** diverging with respect to the axis **X** susceptible to come in contact engage with the substantially fustoconical outer surface **42** of the sleeve **40.**

The screwing of the ring nut **50** on the threaded end member **T** forces the metal annular elastic member **60** to impact against the rigid ring presser **70,** thus promoting the axial translation of the latter.

As far as the rigid ring presser **70** moves, its substantially fustoconical inner surface **73** acts on the substaritially fustoconical outer surface **42** of the sleeve **40** for radially compressing it.

In this way, the inner end **E** of the tube and **P** is radially compressed against the rear portion **22** of the tubular core **20** so that the teeth **25** penetrate the pipe **P** itself.

The particular configuration of the fitting **1** acts in such a way so as to avoid unwanted twisting of the pipe **P** upon the screwing of the ring nut **50** on the threaded end member **T.**

More particularly, the substantially circumferential section of the metal annular elastic member **60** ensures that the contact between the same and the step **71** of the rigid ring presser **70** occurs in a single tangency point.

Moreover, the outer surface perpendicular to the step **71** of the rigid ring presser **70** may suitably be cylindrical and substantially parallel to and spaced from the inner surface **51** of the ring nut **50**, so that between them there is no other contact point besides the above mentioned one.

This minimizes the contact surface between the parts, minimizing the possibility of transfer of the twisting of the ring nut **50** to the parts operatively engaged therewith.

Furthermore, the metal annular elastic member **60** may advantageously be free to rotate on the step **71,** so as not to transfer to the rigid ring presser **70** and consequently to the sleeve **40** the twisting imparted by the ring nut **50** upon the screwing.

Another important advantage of the fitting **1** is that the same is reversible, namely it is possible to unscrew it and reuse it without damaging the pipe **P.**

To this end, the ring nut **50** may have a first step **56** opposite to the metal annular elastic member **60** susceptible to impact against the rigid ring presser **70** upon the unscrewing of the ring nut **50** from the threaded end member **T.**

In this way, the sleeve **40** is free to radially expand, so as to free the pipe **P.**

From an operative point of view, the user first inserts the rear portion **22** of the tubular core **20** in the inner end **E** of the pipe **P,** and then connects the latter to the threaded end member **T** through the screwing of the ring nut **50** thereon.

To facilitate this operation, the elastic sleeve **40** may have the outer diameter of the base edge **48** greater than the minor diameter of the thread on the surface **51** inside the ring nut **50.**

The elastic sleeve **40** may also include a circumferential end tooth **47,** so as to allow the snap engagement between the rigid ring presser **70** and the same sleeve **40.** This assembly is then inserted in the ring nut **50** at the rear portion **53,** and secured against slippage from the metal annular elastic member **60** snap-inserted into the seat **55.**

Suitably, the rigid ring presser **70** and the ring nut **50** may be spaced apart each other, so that between them no friction develops.

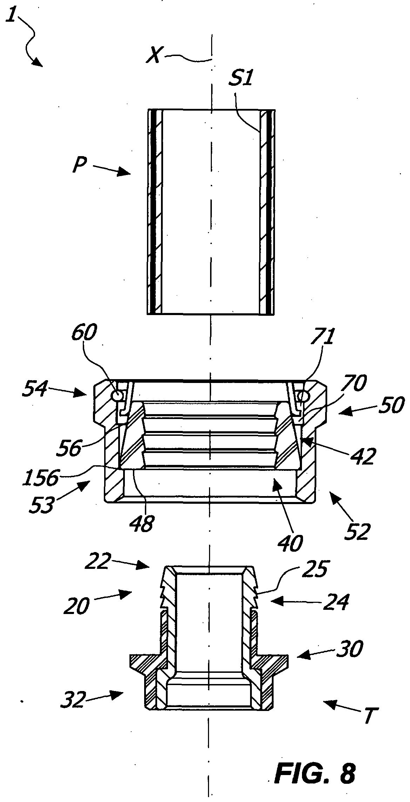

In the embodiment shown in FIGs. 8 to 9b the rigid ring presser **70** may be obtained starting from a steel strip, while the sleeve **40** may be made of polymeric material, for example PVC.

The ring nut **50** may have a second inner step **156** to act as abutment and lock for the sleeve **40.** In this embodiment, the components are inserted from the top, starting from the sleeve **40** which abuts against the step **156.**

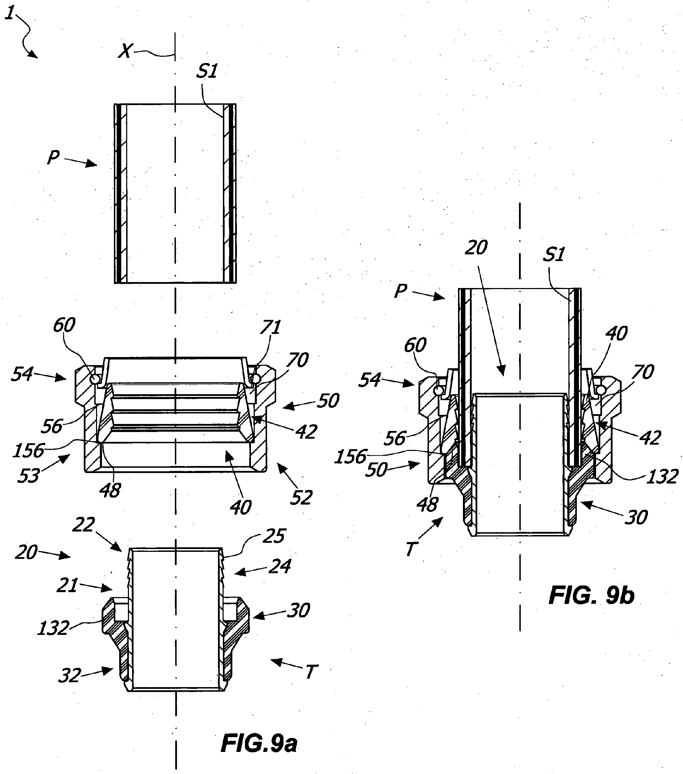

In the embodiment of FIGs. 9a and 9b a portion **132** of the elastomeric seal **30** may act as local seal externally to the end member of the pipe.

Thanks to the coupling between the sleeve **40,** the rigid ring presser **70,** the metal annular elastic member **60** and the ring nut **50** the fitting **1** will be extremely simple to install, as the installer handles one single piece.

Moreover, upon the screwing of the ring nut **50** on the threaded end member **T,** the sleeve **40** creates an axial compression on the pipe **P** directed towards the threaded end member **T**, increasing both the mechanic and the hydraulic seal.

In this way, the pipe **P** is compressed against the seal **30** both radially and axially, so as to impart to the fitting **1** an excellent hydraulic seal.

From the above, it is apparent that the fitting **1** achieves the intended objects.

The fitting **1** is susceptible to numerous modifications and variants all falling within the inventive concept expressed in the appended claims. All particulars may be replaced by other technically equivalent elements, and the materials may be different according to the needs, without exceeding the scope of the invention.

Even though the fitting **1** has been shown with particular reference to the appended figures, the numbers of reference used in the description and in the claims are used to ameliorate the intelligence of the invention and do not constitute a limit to the scope of protection claimed.

## Claims

1. A fitting for the reciprocal connection of a threaded end member **(T)** and a pipe with a smooth surface **(P)** comprising:
- a tubular core **(20)** defining an axis (**X**) having a front portion **(21)** coupled to or monolithic with the threaded end member **(T)** and a rear portion **(22)** to be inserted within the end **(E)** of the pipe **(P)** to come in contact engage with the inner surface thereof;
- a ring nut (**50**) to be screwed on said threaded end member **(T)** having an outer surface **(52)** susceptible to be grasped by a user and an inner surface (**5**1) susceptible to face the pipe **(P),** the inner surface **(51)** including an annular seat **(55);**
- an elastic sleeve **(40)** to be fitted onto the pipe **(P)** having an inner surface **(41)** susceptible to come in contact engage with the outer surface of the pipe **(P)** and a substantially fustoconical outer surface **(42)** diverging with respect to said axis (**X**), said elastic sleeve **(40)** having a discontinuity **(46)** to allow the deformation thereof upon the screwing of said ring nut (**50**) on the threaded end member **(T);**
- an elastomeric seal **(30)** encompassing said tubular core **(20)** and susceptible to remain interposed between the end **(E)** of the pipe **(P),** said elastic sleeve **(40)** and the threaded end member **(T)** to provide the local hydraulic seal;
- a metal annular elastic member **(60)** snap-fit into the annular seat **(55)** of said ring nut **(50);**
- a rigid ring presser **(70)** having an outer surface **(72)** susceptible to come into contact engage with said metal annular elastic member **(60)** and a substantially fustoconical inner surface (**73**) diverging with respect to said axis **(X)** susceptible to come into contact engage with the substantially fustoconical outer surface **(42)** of said sleeve **(40);**
wherein the outer surface of said rigid ring presser **(70)** has a step **(72)** susceptible to impact against said metal annular elastic member **(60)** upon the screwing of said ring nut (**50**) on the threaded end member **(T)** so as to promote the axial translation of said rigid ring presser **(70)** and the consequent radial compression of said elastic sleeve **(40),** so as to radially compress the end **(E)** of the pipe **(P)** against said rear portion **(22)** of said tubular core **(20),** said metal annular elastic **member (60)** having a substantially circumferential section so that the contact with the step **(71)** of said rigid ring presser **(70)** occurs in a single tangency point, in order to avoid unwanted twisting of the pipe **(P)** upon the screwing of said sleeve (**50**) on the threaded end member **(T).**

2. Fitting according to claim 1, wherein said metal annular elastic member **(60)** is free to rotate on said step **(71),** so as not to transfer to the rigid ring presser **(70)** and/or to the sleeve **(40)** the torque imparted by the ring nut (**50**) upon the screwing.

3. Fitting according to claims 1 or 2, wherein said ring nut (**50**) has a step **(56)** opposite to said metal annular elastic member **(60)** susceptible to impact against the rigid ring presser **(70)** upon the unscrewing of said nut ring (**50**) from the threaded end (T) to allow said sleeve **(40)** to radially expand, so as to release the pipe (**P**).

4. Fitting according to claims 1, 2 or 3, wherein said rigid ring presser **(70)** and said sleeve **(40)** are reciprocally snap-fit, the sleeve **(40)** including a circumferential end tooth **(47)** to prevent the slippage of the rigid ring presser **(70),** the assembly of said rigid ring presser **(70)** and said sleeve (**40**) being further inserted in said ring nut **(50)** and blocked by said metal annular elastic member **(60)** inserted in the annular seat (**55**) thereof, so as to form a single body susceptible to be manipulated by the operator.

5. Fitting according to any one of the preceding claims, wherein the outer surface of the rigid ring presser **(70)** is cylindrical and substantially parallel to the inner surface **(51)** of the ring nut (**50**), so as there is no another contact point therebetween besides the one between said step **(71)** of the rigid ring presser **(70)** and said metal annular elastic member **(60).**

6. Fitting according to any one of the preceding claims, wherein said elastomeric seal **(30)** has a first tubular portion **(30)** coaxially coupled with said tubular core **(20)** and a second flange-shaped portion **(32)** having a front face **(33)** susceptible to come in contact engage with the threaded end member **(T)** and a rear face **(34).**

7. Fitting according to the preceding claim, wherein said sleeve **(40)** has a front face **(48)** susceptible to act as abutment for the rear face **(34)** of said second flange-shaped portion **(32)** of said elastomeric seal **(30)** to axially compress it against said threaded end member **(T)** upon the screwing of said ring nut (**50**) thereon, so as to increase the local hydraulic seal.

8. Fitting according to the preceding claim, wherein the rear face **(34)** of said second flange-shaped portion **(32)** of said elastomeric seal **(30)** is susceptible to further act as abutment for the end **(E)** of the pipe **(P),** so as to increase the local hydraulic seal and possibly to act as insulating barrier against stray currents in case the pipe **(P)** includes at least one metal layer.

9. Fitting according to any one of the preceding claims, wherein said elastic sleeve **(40)** and said ring nut (**50**) are reciprocally coupled so as upon the screwing of the latter **(50)** on the threaded end **(T)** and the abutment of the front surface **(48)** of the former **(40)** on the rear surface **(34)** of said second flange-shaped portion **(32)** of said elastomeric seal **(30)** the circumferential end tooth **(47)** of the same elastic sleeve **(40)** protrudes through the rear portion **(54)** of the ring nut (**50**), so as to visually indicate to an operator the axial translating movement of the rigid ring presser **(70)** and the consequent radial compression of the elastic sleeve **(40)** on the outer surface of the pipe **(P).**

10. Fitting according to any one of the preceding claims, wherein the pipe **(P)** comprises at least one layer of polymeric material (**S1**) interacting with said core **(20),** the latter including a plurality of teeth (**25**) susceptible to penetrate in the polymeric material of said at least one layer (**50**) upon the screwing of said sleeve **(40)** on the threaded end member (T) to prevent the slipping of the pipe **(P)** from the latter.

11. Fitting according to any one of the preceding claims, wherein said elastic sleeve **(40)** is made of polymeric material, said rigid ring presser **(70)** being made in metal material preferably manufactured starting from a steel strip worked by cold molding.

## Patentansprüche

1. Anschlussstück für die gegenseitige Verbindung eines mit einem Gewinde versehenen Endglieds (T) und eines Rohres mit einer glatten Oberfläche (P), umfassend:
- einen rohrförmigen Kern (20), der eine Achse (X) definiert und einen vorderen Abschnitt (21), der mit dem mit einem Gewinde versehenen Endglied (T) gekoppelt oder aus einem Guss damit ist, und einen hinteren Abschnitt (22) aufweist, der in das Ende (E) des Rohres (P) einzuführen ist, um mit der Innenfläche davon in Eingriffskontakt zu kommen;
- eine Gewindemutter (50), die auf das mit einem Gewinde versehene Endglied (T) zu schrauben ist und eine Außenfläche (52), die von einem Benutzer ergriffen werden kann, und eine Innenfläche (51) aufweist, die dem Rohr (P) zugewendet werden kann, wobei die Innenfläche (51) einen ringförmigen Sitz (55) umfasst;
- eine elastische Hülse (40), die auf das Rohr (P) aufzustecken ist und eine Innenfläche (41), die mit der Außenfläche des Rohres (P) in Eingriffskontakt kommen kann, und eine im Wesentlichen kegelstumpfförmige Außenfläche (42) aufweist, die in Bezug auf die Achse (X) divergiert, wobei die elastische Hülse (40) eine Unterbrechung (46) aufweist, um beim Schrauben der Ringmutter (50) auf das mit einem Gewinde versehene Endglied (T) die Verformung davon zu ermöglichen;
- eine Elastomerdichtung (30), die den rohrförmigen Kern (20) umgibt und zwischen dem Ende (E) des Rohres (P), der elastische Hülse (40) und dem mit einem Gewinde versehene Endglied (T) eingefügt bleiben kann, um eine lokale Hydraulikdichtung bereitzustellen;
- ein ringförmiges elastisches Metallelement (60), das in den ringförmigen Sitz (55) der Ringmutter (50) schnappeingepasst ist;
- einen starren Ringpresser (70) mit einer Außenfläche (72), die mit dem ringförmigen elastischen Metallelement (60) in Eingriffskontakt kommen kann, und einer im Wesentlichen kegelstumpfförmigen Innenfläche (73), die in Bezug auf die Achse (X) divergiert und mit der im Wesentlichen kegelstumpfförmigen Außenfläche (42) der Hülse (40) in Eingriffskontakt kommen kann;
wobei die Außenfläche des starren Ringpressers (70) eine Stufe (72) aufweist, die beim Schrauben der Ringmutter (50) auf das mit einem Gewinde versehene Endglied (T) gegen das ringförmige elastische Metallelement (60) stoßen kann, um die axiale Verschiebung des starren Ringpressers (70) und die daraus folgende radiale Kompression der elastischen Hülse (40) zu fördern, um das Ende (E) des Rohres (P) gegen den hinteren Abschnitt (22) des rohrförmigen Kerns (20) radial zusammenzudrücken, wobei das ringförmige elastische Metallelement (60) ein im Wesentlichen umfängliches Teilstück so aufweist, dass der Kontakt mit der Stufe (71) des starren Ringpressers (70) an einem einzigen Berührungspunkt erfolgt, um unerwünschtes Verdrehen des Rohres (P) beim Schrauben der Hülse (50) auf das mit einem Gewinde versehene Endglied (T) zu vermeiden.

2. Anschlussstück nach Anspruch 1, wobei das ringförmige elastische Metallelement (60) frei ist, um sich auf der Stufe (71) zu drehen, um das durch die Ringmutter (50) beim Schrauben vermittelte Drehmoment nicht auf den starren Ringpresser (70) und/oder die Hülse (40) zu übertragen.

3. Anschlussstück nach Anspruch 1 oder 2, wobei die Ringmutter (50) eine Stufe (56) gegenüber dem ringförmigen elastischen Metallelement (60) aufweist, die beim Losschrauben der Ringmutter (50) von dem mit einem Gewinde versehenen Ende (T) gegen den starren Ringpresser (70) stoßen kann, um zu ermöglichen, dass sich die Hülse (40) dehnt, um das Rohr (P) freizugeben.

4. Anschlussstück nach Anspruch 1, 2 oder 3, wobei der starre Ringpresser (70) und die Hülse (40) miteinander schnappverbunden sind, wobei die Hülse (40) einen umfänglichen Endzahn (47) umfasst, um das Rutschen des starren Ringpressers (70) zu verhindern, wobei die Anordnung des starren Ringpressers (70) und der Hülse (40) ferner in die Ringmutter (50) eingefügt ist und durch das ringförmige elastische Metallelement (60), das in den ringförmigen Sitz (55) davon eingeführt ist, blockiert wird, um einen einzigen Körper zu bilden, der vom Bediener gehandhabt werden kann.

5. Anschlussstück nach einem der vorhergehenden Ansprüche, wobei die Außenfläche des starren Ringpressers (70) zylindrisch und im Wesentlichen parallel zur Innenfläche (51) der Ringmutter (50) ist, damit es dazwischen keinen anderen Kontaktpunkt neben dem einen zwischen der Stufe (71) des starren Ringpressers (70) und dem ringförmigen elastischen Metallelement (60) gibt.

6. Anschlussstück nach einem der vorhergehenden Ansprüche, wobei die Elastomerdichtung (30) einen ersten, rohrförmigen Abschnitt (30), der koaxial mit dem rohrförmigen Kern (20) gekoppelt ist, und einen zweiten, flanschförmigen Abschnitt (32) aufweist, der eine Vorderfläche (33), die mit dem mit einem Gewinde versehenen Endglied (T) in Eingriffskontakt kommen kann, und eine Rückfläche (34) aufweist.

7. Anschlussstück nach einem der vorhergehenden Ansprüche, wobei die Hülse (40) eine Vorderfläche (48) aufweist, die als Anschlag für die Rückfläche (34) des zweiten, flanschförmigen Abschnitts (32) der Elastomerdichtung (30) dienen kann, um sie beim Schrauben der Ringmutter (50) darauf gegen das mit einem Gewinde versehene Endglied (T) axial zusammenzudrücken, um die lokale Hydraulikdichtung zu verbessern.

8. Anschlussstück nach einem der vorhergehenden Ansprüche, wobei die Rückfläche (34) des zweiten, flanschförmigen Abschnitts (32) der Elastomerdichtung (30) ferner als Anschlag für das Ende (E) des Rohres (P) dienen kann, um die lokale Hydraulikdichtung zu verbessern, und möglicherweise als isolierende Barriere gegen Streuströme dienen kann, falls das Rohr (P) mindestens eine Metallschicht umfasst.

9. Anschlussstück nach einem der vorhergehenden Ansprüche, wobei die elastische Hülse (40) und die Ringmutter (50) miteinander gekoppelt sind, damit beim Schrauben der Letzteren (50) auf das mit einem Gewinde versehende Ende (T) und beim Anschlag der Vorderfläche (48) der Ersteren (40) an der Rückfläche (34) des zweiten, flanschförmigen Abschnitts (32) der Elastomerdichtung (30) der umfängliche Endzahn (47) derselben elastischen Hülse (40) durch den hinteren Abschnitt (54) der Ringmutter (50) vorsteht, um einem Bediener die axiale Verschiebungsbewegung des starren Ringpressers (70) und die daraus folgende radiale Kompression der elastischen Hülse (40) auf der Außenfläche des Rohres (P) optisch anzuzeigen.

10. Anschlussstück nach einem der vorhergehenden Ansprüche, wobei das Rohr (P) mindestens eine Schicht aus Polymermaterial (S1) umfasst, die mit dem Kern (20) interagiert, wobei der Letztere eine Mehrzahl von Zähnen (25) umfasst, die in das Polymermaterial der mindestens einen Schicht (50) beim Schrauben der Hülse (40) auf das mit einem Gewinde versehene Endglied (T) eindringen können, um das Rutschen des Rohres (P) von Letzterem zu verhindern.

11. Anschlussstück nach einem der vorhergehenden Ansprüche, wobei die elastische Hülse (40) aus Polymermaterial hergestellt ist, der starre Ringpresser (70) aus Metallmaterial hergestellt ist, das vorzugsweise ausgehend von einem Stahlstreifen angefertigt ist, der durch Kaltformen bearbeitet ist.

## Revendications

1. Raccord permettant le raccordement réciproque d'un élément d'extrémité filetée (T) et d'un tuyau présentant une surface lisse (P) comprenant :
- un noyau tubulaire (20) définissant un axe (X) ayant une partie avant (21) reliée à l'élément d'extrémité filetée (T), ou monolithique avec celui-ci, et une partie arrière (22) à insérer dans l'extrémité (E) du tuyau (P) pour venir en contact en prise avec la surface interne de celui-ci ;
- un écrou annulaire (50) à visser sur ledit élément d'extrémité filetée (T) ayant une surface externe (52) susceptible d'être saisie par un utilisateur et une surface interne (51) susceptible de faire face au tuyau (P), la surface interne (51) comprenant un siège annulaire (55) ;
- un manchon élastique (40) destiné à être monté sur le tuyau (P) ayant une surface interne (41) susceptible de venir en contact en prise avec la surface externe du tuyau (P) et une surface externe sensiblement tronconique (42) divergente par rapport audit axe (X), ledit manchon élastique (40) ayant une discontinuité (46) pour permettre la déformation de celui-ci lors du vissage dudit écrou annulaire (50) sur l'élément d'extrémité filetée (T) ;
- un joint élastomère (30) englobant ledit noyau tubulaire (20) et susceptible de rester intercalé entre l'extrémité (E) du tuyau (P), ledit manchon élastique (40) et l'élément d'extrémité filetée (T) pour fournir le joint hydraulique local ;
- un élément élastique annulaire métallique (60) emboîté dans le siège annulaire (55) dudit écrou annulaire (50) ;
- un presseur annulaire rigide (70) ayant une surface externe (72) susceptible de venir en contact en prise avec ledit élément élastique annulaire métallique (60) et une surface interne sensiblement tronconique (73) divergente par rapport audit axe (X) susceptible de venir en contact en prise avec la surface externe sensiblement tronconique (42) dudit manchon (40) ;
dans lequel la surface externe dudit presseur annulaire rigide (70) présente une marche (72) susceptible de percuter ledit élément élastique annulaire métallique (60) lors du vissage dudit écrou annulaire (50) sur l'élément d'extrémité filetée (T) de façon à favoriser la translation axiale dudit presseur annulaire rigide (70) et la compression radiale conséquente dudit manchon élastique (40), de manière à comprimer de manière radiale l'extrémité (E) du tuyau (P) contre ladite partie arrière (22) dudit noyau tubulaire (20), ledit élément élastique annulaire métallique (60) ayant une section sensiblement circonférentielle de sorte que le contact avec la marche (71) dudit presseur annulaire rigide (70) se produit dans un seul point de tangence, afin d'éviter une torsion non souhaitée du tuyau (P) lors du vissage dudit manchon (50) sur l'élément d'extrémité filetée (T).

2. Raccord selon la revendication 1, dans lequel ledit élément élastique annulaire métallique (60) peut tourner librement sur ladite marche (71), de façon à ne pas transférer au presseur annulaire rigide (70) et/ou au manchon (40) le couple appliqué par l'écrou annulaire (50) lors du vissage.

3. Raccord selon la revendication 1 ou 2, dans lequel ledit écrou annulaire (50) présente une marche (56) opposée audit élément élastique annulaire métallique (60) susceptible de percuter le presseur annulaire rigide (70) lors du dévissage dudit écrou annulaire (50) de l'extrémité filetée (T) pour permettre audit manchon (40) de s'étendre de manière radiale, de façon à libérer le tuyau (P).

4. Raccord selon les revendications 1, 2 ou 3, dans lequel ledit presseur annulaire rigide (70) et ledit manchon (40) sont emboîtés réciproquement, le manchon (40) comprenant une dent d'extrémité circonférentielle (47) pour empêcher le glissement du presseur annulaire rigide (70), l'ensemble dudit presseur annulaire rigide (70) et dudit manchon (40) étant en outre inséré dans ledit écrou annulaire (50) et bloqué par ledit élément élastique annulaire métallique (60) inséré dans le siège annulaire (55) de celui-ci, de façon à former un seul corps susceptible d'être manipulé par l'opérateur.

5. Raccord selon l'une quelconque des revendications précédentes, dans lequel la surface externe du presseur annulaire rigide (70) est cylindrique et sensiblement parallèle à la surface interne (51) de l'écrou annulaire (50), de sorte qu'il n'y a aucun autre point de contact entre eux en plus de celui entre ladite marche (71) du presseur annulaire rigide (70) et ledit élément élastique annulaire métallique (60).

6. Raccord selon l'une quelconque des revendications précédentes, dans lequel ledit joint élastomère (30) possède une première partie tubulaire (30) raccordée de manière coaxiale avec ledit noyau tubulaire (20) et une seconde partie en forme de bride (32) ayant une face avant (33) susceptible de venir en contact en prise avec l'élément d'extrémité filetée (T) et une face arrière (34).

7. Raccord selon la revendication précédente, dans lequel ledit manchon (40) possède une face avant (48) susceptible de servir de butée à la face arrière (34) de ladite seconde partie en forme de bride (32) dudit joint élastomère (30) afin de le comprimer axialement contre ledit élément d'extrémité filetée (T) lors du vissage dudit écrou annulaire (50) sur celui-ci, de façon à augmenter le joint hydraulique local.

8. Raccord selon 1a revendication précédente, dans lequel la face arrière (34) de ladite seconde partie en forme de bride (32) dudit joint élastomère (30) est en outre susceptible de servir de butée à l'extrémité (E) du tuyau (P), de façon à augmenter le joint hydraulique local et éventuellement à agir en tant que barrière isolante contre des courants vagabonds au cas où le tuyau (P) comprend au moins une couche métallique.

9. Raccord selon l'une quelconque des revendications précédentes, dans lequel ledit manchon élastique (40) et ledit écrou annulaire (50) sont raccordés réciproquement de sorte que lors du vissage de ce dernier (50) sur l'extrémité filetée (T) et la butée de la surface avant (48) du premier (40) sur la surface arrière (34) de ladite seconde partie en forme de bride (32) dudit joint élastomère (30), la dent d'extrémité circonférentielle (47) du même manchon élastique (40) dépasse à travers la partie arrière (54) de l'écrou annulaire (50), de façon à indiquer visuellement à un opérateur le mouvement de translation axiale du presseur annulaire rigide (70) et la compression radiale résultante du manchon élastique (40) sur la surface externe du tuyau (P).

10. Raccord selon l'une quelconque des revendications précédentes, dans lequel le tuyau (P) comprend au moins une couche de matériau polymère (S1) interagissant avec ledit noyau (20), ce dernier comprenant une pluralité de dents (25) susceptibles de pénétrer dans le matériau polymère de ladite au moins une couche (50) lors du vissage dudit manchon (40) sur l'élément d'extrémité filetée (T) pour empêcher le glissement du tuyau (P) de ce dernier.

11. Raccord selon l'une quelconque des revendications précédentes, dans lequel ledit manchon élastique (40) est composé d'un matériau polymère, ledit presseur annulaire rigide (70) étant composé d'un matériau métallique fabriqué de préférence en commençant par une bande d'acier travaillée par moulage à froid.
